# EUROPEAN PATENT SPECIFICATION

(11) **EP 1 169 906 B1**
(45) Date of publication and mention of the grant of the patent: **28.09.2005**
(21) Application number: 01113849.2
(22) Date of filing: 07.06.2001
(51) Int. Cl.: A01D 41/14

(54) **Shearing bar apparatus for agricultural harvesting machines**
Mähbrett für Erntemaschinen
Tablier de coupe pour machines de récolte

(30) Priority: 30.06.2000 IT UD000131
(43) Date of publication of application: 09.01.2002
(73) Proprietor: F.LLI CRESSONI SpA, 46049 Volta Mantovana (MN) (IT)
(72) Inventor: Cressoni, Romano, 46049 Volta Mantovana (MN) (IT)
(74) Representative: Petraz, Gilberto Luigi

(56) References cited:
- EP-A- 0 326 836
- EP-A- 0 503 233
- EP-A- 0 624 309
- DE-A- 2 026 190

## Description

The invention concerns a shearing bar apparatus able to be assembled on the front part of an agricultural harvesting machine, such as a combine harvester, a self-propelled shredder, or similar.

The apparatus according to the invention comprises two or more independent operating parts, associated with a supporting structure. In the working position, or harvesting position, all the operating parts are aligned on the same horizontal plane, near the ground, so as to cover as wide a harvesting zone as possible; in the inactive position, or when the machine is being transferred, one or two operating parts are arranged above another, lower operating part to occupy as little road space as possible. The operating parts are moved from one position to the other in such a manner that the baricenter of the combination of the two operating parts remains substantially unchanged.

### BACKGROUND OF THE INVENTION

The state of the art includes a shearing bar apparatus for agricultural harvesting machines, which consists of two operating parts each of which is substantially as long as the width of the agricultural machine. The two operating parts of the apparatus pivot on each other and can selectively assume a harvesting position, wherein they are aligned on the same horizontal plane, so that they cover a harvesting zone substantially equal to double their length, or an inactive position, or when the agricultural machine has to be transferred, wherein they are arranged one above the other so as to occupy as little road space as possible, a little more than the length of one of the two.

In this conventional apparatus, one of the two operating parts always stays horizontal, while the other, which pivots on the upper part of the first, more precisely on a pin which has its axis parallel to the longitudinal axis of the agricultural machine, is able to be positioned above the first operating part, performing a rotation of 180° around said pin. Before they are superimposed, the two operating parts are made to translate together, horizontally and in the same direction, perpendicular to the longitudinal axis of the agricultural machine, to position one of the two parts centrally with respect to the latter.

This conventional apparatus has the following disadvantages, however.

When the second operating part is rotated through 180° with respect to the first, on which it pivots, there is a considerable imbalance of the weights, and the baricenter of the combination of the two operating parts is continually displaced. This requires very strong structures and command members, in order to support the torsional stresses.

The second operating part, after rotating through 90°, is hence in a vertical position, with one end at several metres from the ground, well above the top of the cabin of the agricultural harvesting machine on which it is assembled, with consequent problems of bulk during the folding operation.

When they are superimposed, the two operating parts take up considerable space in height, since the pivoting point of the second operating part is arranged very much above the upper surface of the first operating part.

Both operating parts, since they pivot on each other, have to be translated together in the same direction, after they have been folded back one on top of the other, so that the relative command members have to have adequate strength.

Since each of the two operating parts is provided with a shearing blade and a conveyor roller which, during harvesting, have their lower part arranged near the ground, in the transfer position the shearing blade and the conveyor roller of the second operating part, which is rotated by 180°, come to be very high up, thus preventing the operator of the agricultural machine from seeing the road near the machine.

The present Applicant has devised, tested and embodied this invention to overcome these shortcomings of the state of the art and to obtain further advantages.

### SUMMARY OF THE INVENTION

The invention is set forth and characterized in the main claim, while the dependent claims describe other innovative features of the invention.

One purpose of the invention is to achieve a shearing bar apparatus able to be arranged on the front part of an agricultural harvesting machine, transverse to the longitudinal axis of the latter, which in the working position allows to operate on as wide a harvesting zone as possible, whereas in the inactive position, or when the agricultural machine is being transferred, it occupies as little space as possible.

Another purpose of the invention is to achieve an apparatus in which the operating parts which constitute the apparatus, as they pass from one of said working and inactive positions to the other, are subject to the minimum number of movements necessary and without any imbalance of weight.

Another purpose of the invention is to achieve an apparatus which, even when it is in the inactive position, allows the operator of the agricultural machine optimum visibility when driving, even of the stretch of road next to the machine.

Another purpose of the invention is to achieve an apparatus which will allow to assemble, on each of the two operating parts which constitute the apparatus, a shearing blade which is substantially as long as the maximum road space allowed.

In accordance with these purposes, the apparatus according to the invention comprises two or more operating parts each of which is provided with substantially horizontal shearing means and both supported, in autonomous fashion, by support means which can be associated with the agricultural machine. A second of said two operating parts is able to be translated, remaining substantially horizontal, between an inactive position, wherein it is superimposed above said first part, and a working position wherein it is horizontally aligned therewith. Actuation means are provided to perform the movements, in synchronized fashion, of the two operating parts, so that the baricenter of the combination of the operating parts remains substantially in a centered position during these movements too.

In a first form of embodiment, the invention comprises two operating parts, of which a first is able to slide axially with respect to the support means, between an inactive position, wherein it is centered with respect to the agricultural machine, and a working position wherein it is laterally displaced with respect to the agricultural machine.

The actuation means comprise at least a first fluid-dynamic actuator able to displace said first operating part horizontally, at least a second fluid-dynamic actuator able to displace said second operating part vertically and at least a third fluid-dynamic actuator able to displace said second operating part horizontally. Computerized control means are provided to coordinate the actuation of the first, second and third actuators.

In a second form of embodiment, the invention comprises three operating parts: a first, central part is attached to the support means, while a second and a third part are arranged laterally with respect to the first. The two lateral parts are able to translate, remaining substantially horizontal, between a working position wherein they are horizontally aligned with the first part, and an inactive position wherein they are superimposed above the first part and adjacent to each other.

The actuation means of each lateral part comprise a pair of toothed wheels assembled rotatable on support means. The end of an arm, advantageously elbow-shaped, is attached to each toothed wheel; the arm is connected to a pin attached to the corresponding lateral part.

The toothed wheels of each pair are connected with each other by a connection chain assisted by a fluid-dynamic actuator. The distance between the centers of rotation of the toothed wheels of each pair is substantially equal to the distance between the pins of the corresponding lateral part, so as to form a structure substantially like a pantograph which allows the relative operating part to be translated, remaining substantially horizontal.

In this way, all the afore-said purposes are achieved, and at the same time all the shortcomings of traditional machines are eliminated.

### BRIEF DESCRIPTION OF THE DRAWINGS

These and other characteristics of the invention will be clear from the following description of a preferential form of embodiment, given as a non-restrictive example, with reference to the attached drawings wherein:
- Fig. 1: is a left side view of an apparatus according to the invention, assembled on an agricultural harvesting machine, in a working position;
- Fig. 2: is a left side view of the apparatus in Fig. 1, in the inactive position;
- Fig. 3: is a schematic rear view of a first form of embodiment of the apparatus in Fig. 1 in the working position;
- Fig. 4: is a right side view of the apparatus in Fig. 3 in the working position;
- Fig. 5: is a schematic rear view of the apparatus in Fig. 3 in a first intermediate position between the working and inactive position;
- Fig. 6: is a right side view of the apparatus according to the invention, in the position shown in Fig. 5;
- Fig. 7: is a schematic rear view of the apparatus in Fig. 3 in a second intermediate position between the working and inactive position;
- Fig. 8: is a right side view of the apparatus according to the invention, in the position shown in Fig. 7;
- Fig. 9: is a schematic rear view of the apparatus in Fig. 3 in the inactive position;
- Fig. 10: is a right side view of the apparatus according to the invention, in the position shown in Fig. 9; and
- Fig. 11: is a schematic block diagram of the control circuit of the fluid-dynamic actuators of the apparatus shown in Fig. 1;
- Fig. 12: is a schematic rear view of a second form of embodiment of the apparatus in Fig. 1 in the working position;
- Fig. 13: is a schematic rear view of the apparatus in Fig. 12 in a first intermediate position between the working position and the inactive position;
- Fig. 14: is a schematic rear view of the apparatus in Fig. 12 in a second intermediate position between the working position and the inactive position;
- Fig. 15: is a schematic rear view of the apparatus in Fig. 12 in the inactive position.

### DETAILED DESCRIPTION OF SOME PREFERRED EMBODIMENTS

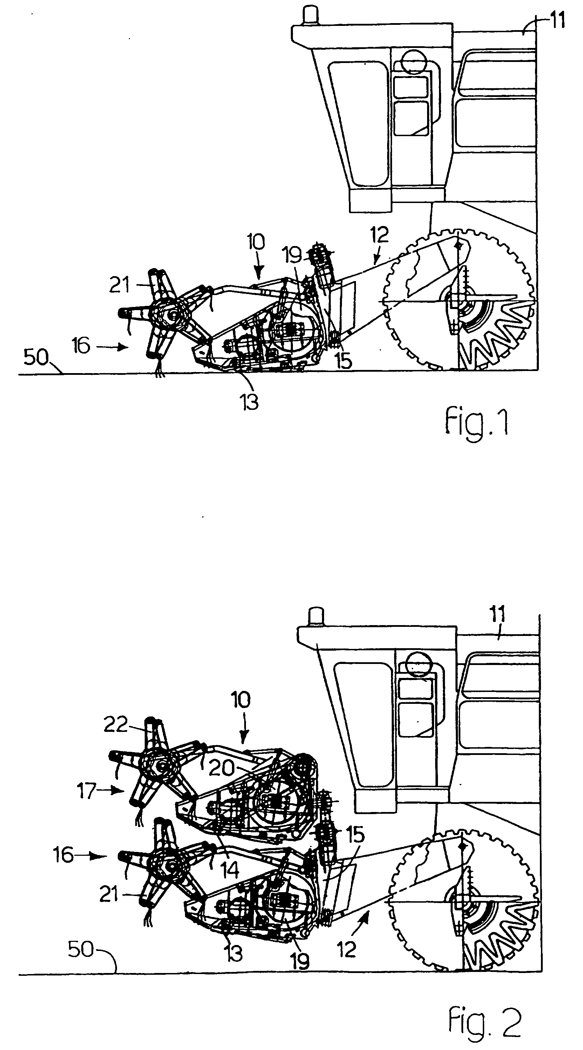

With reference to Figs. 1 and 2, a shearing bar apparatus 10 according to the invention is assembled on the front part of an agricultural harvesting machine 11 of a conventional type, such as for example a combine harvester, a self-propelled shredder, or similar.

The apparatus 10 comprises a rear frame 15 assembled in removable fashion on the movable structure 12 of the machine 11.

The apparatus 10 also comprises at least two operating parts 16 and 17, independent of each other and both assembled on the frame 15.

Each operating part 16 and 17 comprises a front shearing blade 13, respectively 14, and a conveyor roller 19, respectively 20, arranged below, and a front reel 21, respectively 22, arranged above and forward with respect to the direction of movement of the machine 11. The shearing blades 13 and 14, the conveyor rollers 19 and 20 and the reels 21 and 22 are of conventional type, and therefore they are only shown schematically in the drawings.

To give an indicative figure, each operating part 16 and 17 is about 3 m long and about 85 cm high, apart from the bulk of the reels 21 and 22.

The first operating part 16 is assembled able to slide horizontally on guides 25 of the frame 15 and is movable between two extreme positions, a working position (shown in Figs. 1, 3, 4, 5 and 6) and an inactive position, or when the agricultural machine 11 is being transferred (shown in Figs. 2, 9 and 10). The operating part 16 is moved by a first fluid-dynamic actuator 30 with one end 31 connected to the frame 15 and one end 32 connected to the operating part 16.

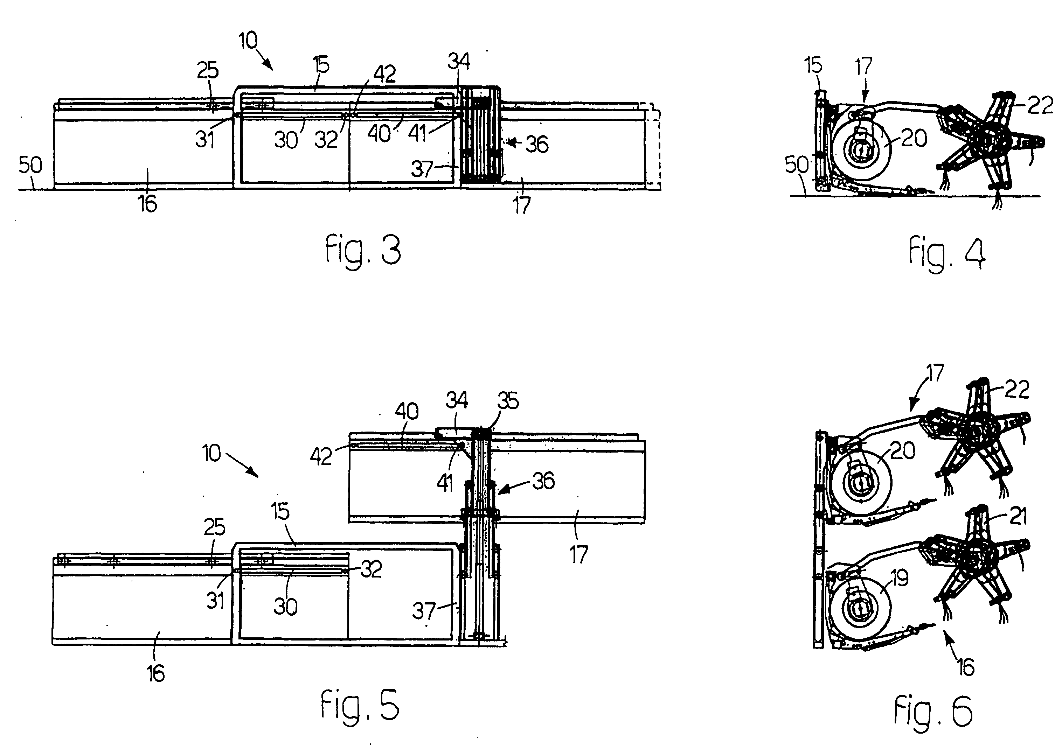

The second operating part 17 is supported by a guide element 34 assembled at one end 35 of a second fluid-dynamic actuator 36, with a telescopic piston, attached to the right side 37 (Figs. 3, 5, 7 and 9) of the frame 15. The actuator 36 is able to displace the operating part 17 vertically between a lowered working position (shown in Figs. 1, 3 and 4) and a raised position. In the working position the operating part 17 is exactly adjacent to the operating part 16, so that together they define a harvesting zone with a width of about 6 m.

It should be noted that the overall space occupied transversely by the frame 15 and the actuator 36 attached thereto is less than the length of each of the operating parts 16 and 17. In this way, as there are no actuator members arranged at the sides of the operating parts 16 and 17, either when they are in the inactive position or even less when they are in the working position, the whole length of each operating part 16 and 17 can be used to accommodate the corresponding conveyor roller 19 and 20, which can thus be substantially as long as the maximum road space allowed.

The second operating part 17 is also movable horizontally with respect to the guide element 34, by means of a third fluid-dynamic actuator 40 with one end 41 connected to the guide element 34 and one end 42 connected to the operating part 17 itself.

The actuator 40 is able to displace the part 17 between an inactive position, centered with respect to the frame 15, and an intermediate position, laterally decentered with respect to the frame 15, which becomes the working position when the second operating part 17 is lowered to the level of the first operating part 16.

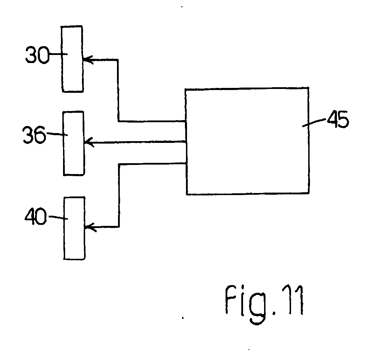

A calculator 45 (Fig. 11), of a conventional type, is connected to the actuators 30, 36 and 40 to command them selectively and to synchronize their actuation. The calculator 45 is connected to a command console, of a conventional type and not shown in the drawings, situated in the cabin of the machine 11.

The apparatus 10 as described heretofore functions as follows.

Under normal working conditions, that is to say, when the agricultural machine 11 is harvesting, the apparatus 10 is in the positions shown in Figs. 1 and 3. The two operating parts 16 and 17 are adjacent so as to form a single harvesting unit or assembly, with the shearing blades 13 and 14 aligned horizontally and arranged very close to the ground 50.

With the apparatus 10 in this position, the operator of the machine 11 has optimum visibility, scarcely limited at all by the apparatus 10, since the operating parts 16 and 17, and particularly the blades 13 and 14 and the rollers 19 and 20, are in a very low position with respect to the driver's cabin.

To move the operating parts 16 and 17 to the inactive position, that is, to allow the machine 11 to travel over normal roads with the apparatus 10 assembled at the front, the actuators 30, 36 and 40 are actuated in synchrony, as follows.

First of all the actuator 40 is actuated, so as to make the second operating part 17 perform an extra horizontal travel towards the right side of the apparatus 10, to detach it by about 15 cm from the first operating part 16 and move it temporarily to the position shown by a line of dashes in Fig. 3.

Then the actuator 36 is actuated to raise the second operating part 17 vertically until it is taken to the first intermediate position shown in Figs. 5 and 6.

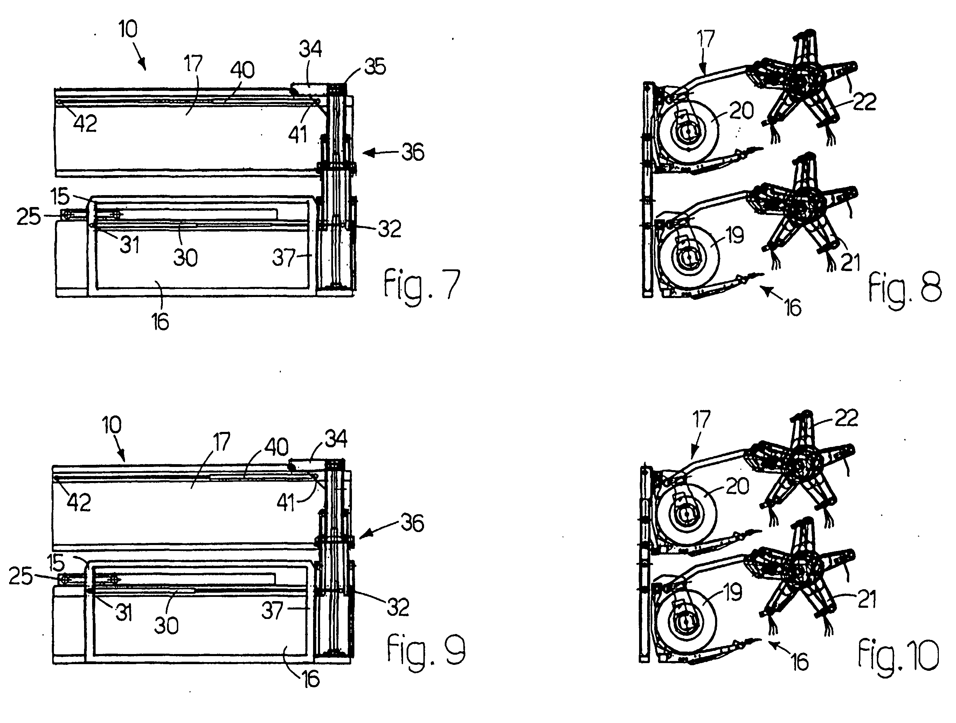

Then, the actuators 30 and 40 are simultaneously actuated, to move both operating parts 16 and 17 together but in opposite directions, until they are centered with respect to the frame 15 (position shown in Fig. 7). In this way the baricenter of the two combined operating parts remains substantially centered with respect to the frame 15, despite the movement of the two operating parts 16 and 17.

With a further actuation of the actuator 36, the second operating part 17 is lowered and moved next to the first operating part 16, to reduce the space occupied in height to a minimum (position shown in Fig. 9).

In this position the apparatus 10 occupies minimal space, both in width, since it is equal to the length of one of the operating parts 16 and 17, that is, about 3 m, and also in height, since it is a little over double the height of the two operating parts 16 and 17, that is, a little over 170 cm.

Moreover, since with the purely translatory movement of the second operating part 17 the shearing blade 14 and the roller 20 have remained in their lower position, in this inactive position too (Fig. 2) the driver of the agricultural machine 11 has a very good visibility, which allows him to see the ground 50 or road surface through the reels 21 and 22, a few meters in front of his observation point, notwithstanding the fact that in the position, when it has to be transported, the entire apparatus 10 is raised from the ground 50.

The movement of the operating parts 16 and 17 from the inactive position to the working position is carried out in the reverse order to that described heretofore.

First, the second operating part 17 is raised (Fig. 7), then the two operating parts 16 and 17 are displaced simultaneously towards the sides of the apparatus 10 (Fig. 5), then the operating part 17 is lowered, and brought close to the operating part 16 (Fig. 3).

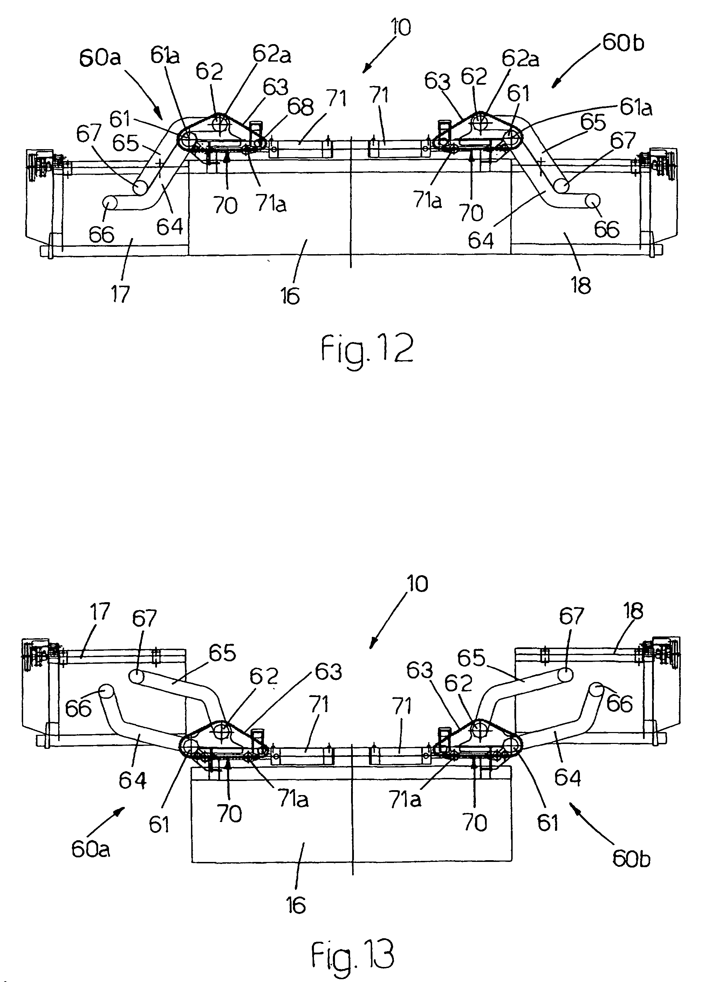

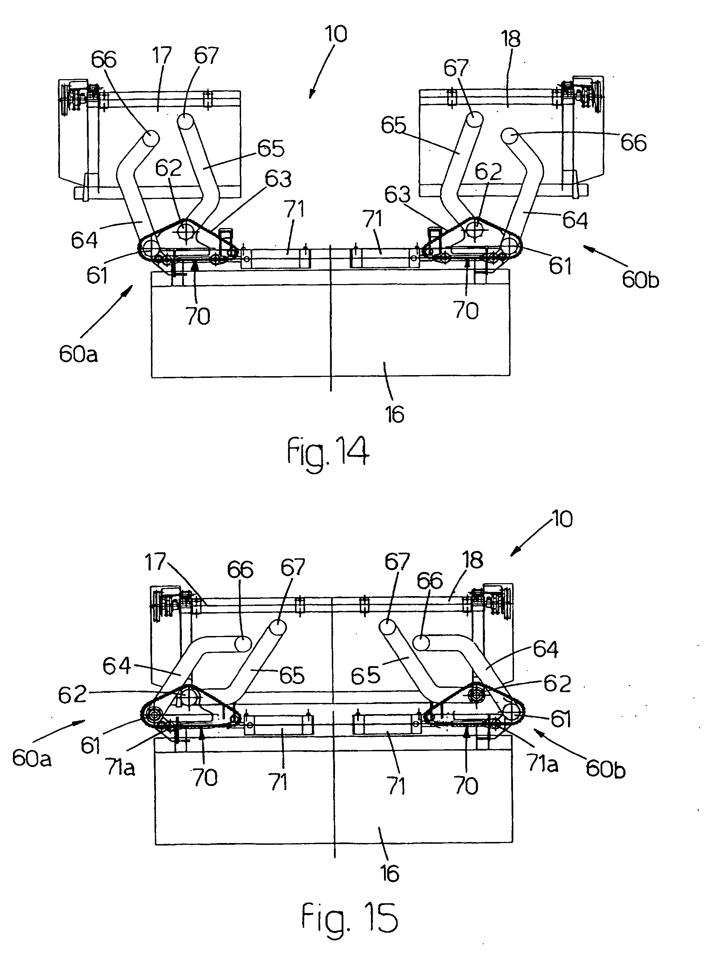

In accordance with a second form of embodiment, as shown in Figs. 12-15, the apparatus 10 comprises three operating parts 16, 17 and 18. To be more exact, a first part 16 is attached to the frame 15 in a substantially central position with respect to the agricultural machine 11, whereas a second part 17 and a third part 18 are able to assume a working position wherein they are arranged aligned with the first operating part 16, and an inactive position wherein they are superimposed thereon and horizontally aligned with each other.

Each lateral operating part 17 and 18 is half as long as the central part 16.

The operating parts 17 and 18, as they move from one of their positions to the other, working and inactive, are able to be translated simultaneously, remaining substantially horizontal.

This translation is performed by two actuation mechanisms 60a and 60b, which are arranged on opposite sides with respect to the frame 15; each of them comprises two toothed wheels 61 and 62 assembled rotatable around respective pins 61a and 62a both attached to the central part 16. The two toothed wheels 61 and 62 are connected to each other by a connection chain 63 arranged in such a manner as to make them rotate in the same direction of rotation.

The ends of a first elbow-shaped arm 64 and a second elbow-shaped arm 65, arranged specular to each other, are respectively attached to the two toothed wheels 61 and 62.

Each elbow-shaped arm 64, 65 has its second end connected by means of a pin 66, respectively 67, to the movable operating part 17 or 18. The distance between the axes of rotation of the two toothed wheels 61 and 62 is equal to the distance between the pin 66 and the pin 67.

In this way a parallelogram is formed which allows the arms 64 and 65 to move like a pantograph. This rotation determines the translation of the movable operating parts 17 and 18 from the working position to the inactive position and vice versa, keeping them substantially horizontal.

Each actuation mechanism 60a and 60b also comprises a chain-tautener wheel 68 arranged in association with the toothed wheel 61, in such a fashion as to define a substantially rectilinear segment 70 of the connection chain 63, in correspondence with which the latter is connected to the end of a rod 71a of an actuator 71 attached to the first operating part 16 in correspondence with the upper surface of the frame 15.

The actuation of the actuator 71, by means of the chain 63 and the toothed wheels 61 and 62, makes the two elbow-shaped arms 64 and 65 rotate. This movement occurs simultaneously both for the actuation mechanism 60a and also for the actuation mechanism 60b, so that the baricenter of the apparatus 10 remains substantially on a central plane with respect to the agricultural machine 11.

Moreover, the amplitude of the angle α which the two arms 64 and 65 can follow is about 210°, and allows to use only the actuator 71 to move them between the two positions.

It is obvious that additions or modifications can be made to the apparatus 10 as described heretofore without departing from the spirit and scope of the invention.

For example, instead of the fluid-dynamic actuators, drive means associated with suitable servo mechanisms can equally well be used.

It is also obvious that, although the invention has been described with reference to a specific example, a person of skill in the art shall certainly be able to achieve many other equivalent applications of the apparatus described above, all of which shall come within the field and scope of the invention.

## Claims

1. Shearing bar apparatus able to be assembled on an agricultural harvesting machine (11), comprising at least a first and a second operating part (16, 17) each provided with substantially horizontal shearing means (13, 14), and support means (15) which can be associated with said agricultural machine (11) and able to support said two operating parts (16, 17), said two operating parts (16, 17) being able to assume respective working positions wherein they are aligned on a same horizontal plane and wherein at least one of said two operating parts (16, 17) protrudes, at least partly, from one side with respect to said agricultural machine (11), the apparatus being **characterized in that** each of said two operating parts (16, 17) is supported in autonomous fashion by said support means (15), that said second operating part (17) is able to be translated, remaining substantially horizontal, between said working position and an inactive position, wherein it is superimposed on top of said first operating part (16), and that said first operating part (16) is able to slide axially with respect to said support means (15), between said working position wherein it protrudes at least partly from one side of said agricultural machine (11) and an inactive position, wherein it is centered with respect to said agricultural machine (11).

2. Apparatus as in claim 1, **characterized in that** actuation means (30, 36, 40, 60a, 60b) are provided to perform, in synchronized fashion, the movements of said movable operating parts, so that the baricenter of the combination of said operating parts (16, 17, 18) remains substantially in a centered position with respect to said agricultural machine (11) also during said movements.

3. Apparatus as in Claim 2, wherein said shearing means comprise at least a shearing blade (13, 14) assembled in a lower zone of the corresponding operating part (16, 17, 18), to be near the ground (50) when each operating part (16, 17, 18) is in the working position, **characterized in that** said actuation means are able to make each movable operating part perform purely translatory, not rotational, movements, so that the relative shearing blade (14) is able to remain in its lower position, even when said movable operating parts (17, 18) are in the inactive position, to allow the driver of said agricultural machine (11) better visibility.

4. Apparatus as in Claim 2, **characterized in that** said actuation means comprise at least a first fluid-dynamic actuator (30) able to horizontally displace said first operating part (16).

5. Apparatus as in Claim 4, **characterized in that** said first fluid-dynamic actuator (30) has one end (31) connected to said supporting structure (15) and one end (32) connected to said first operating part (16).

6. Apparatus as in Claim 2, **characterized in that** said actuation means comprise at least a second fluid-dynamic actuator (36) able to displace said second operating part (17) vertically and at least a third fluid-dynamic actuator (40) able to displace said second operating part (17) horizontally.

7. Apparatus as in Claims 4 and 6, **characterized in that** said first and third fluid-dynamic actuators (30, 40) are able to be actuated simultaneously to displace said two operating parts (16, 17) simultaneously but in opposite directions.

8. Apparatus as in Claims 4 and 6, **characterized in that** said actuation means comprise computerized control means (45) able to coordinate the actuation of said first, second and third fluid-dynamic actuators (30, 36, 40).

9. Apparatus as in Claim 2, **characterized in that** said actuation means (60a, 60b) each comprise a first toothed wheel (61) and a second toothed wheel (62) both assembled on opposite sides and rotatable with respect to said support means (15), said first toothed wheel (61) being attached to one end of a first arm (64) connected to first pin means (66) of said second operating part (17, 18), said toothed wheel (62) being attached to one end of a corresponding second arm (65) connected to second pin means (67) of said second operating part (17, 18), a connection chain (63) being able to connect said toothed wheels (61, 62) to each other.

10. Apparatus as in Claim 9, **characterized in that** both of said arms (64, 65) are substantially elbow-shaped, and are arranged substantially specular to each other, so as to be able to rotate by an angle ("α") greater than 180°.

11. Apparatus as in Claim 9, **characterized in that** the distance between the axes of rotation of said two toothed wheels (61, 62) is substantially equal to the distance between said two pin means (66, 67).

12. Apparatus as in Claim 9, **characterized in that** at least a chain-tautener element (68) is arranged so as to define a substantially rectilinear segment (70) of said connection chain (63).

13. Apparatus as in Claim 12, **characterized in that**, in correspondence with said substantially rectilinear segment (70), said connection chain (63) is connected with a corresponding actuator (71) assembled on said support means (15).

14. Apparatus as in Claim 1, **characterized in that** said supporting structure comprises a rear frame (15) able to be assembled on the movable structure (12) of said agricultural machine (11).

15. Apparatus as in Claims 5 and 8, **characterized in that** said second fluid-dynamic actuator (36) is attached on a side (37) of said rear frame (15) and that the overall transverse bulk of said rear frame (15) and of said second fluid-dynamic actuator (36) is less than the length of each of said operating parts (16, 17).

16. Apparatus as in Claim 1, **characterized in that** each of said shearing means (13, 14) is substantially as long as the corresponding operating part (16, 17).

17. Apparatus as in Claim 1, **characterized in that** each operating part (16, 17) comprises a front reel (21, 22).

18. Apparatus as in Claim 1, **characterized in that** each operating part (16, 17) comprises a conveyor roller (19, 20).

19. Apparatus as in Claims 5 and 8, **characterized in that** said first operating part (16) is assembled able to slide horizontally on guides (25) of said rear frame (15), and that said second operating part (17) is supported by a guide element (34) assembled on said second fluid-dynamic actuator (36).

20. Apparatus as in Claim 19, **characterized in that** said third fluid-dynamic actuator (40) has one end (41) connected to said guide element (34) and one end (42) connected to said second operating part (17).

## Patentansprüche

1. Mähbalkenvorrichtung, die an einer landwirtschaftlichen Erntemaschine (11) montiert werden kann, umfassend mindestens ein erstes und ein zweites Arbeitsteil (16, 17), die jeweils mit im Wesentlichen horizontalen Schereinrichtungen (13, 14) versehen sind, und eine Halterung (15), die mit der landwirtschaftlichen Maschine (11) verbunden werden kann und imstande ist, die zwei Arbeitsteile (16, 17) zu halten, wobei die zwei Arbeitsteile (16, 17) entsprechende Arbeitsstellungen einnehmen können, in denen sie auf einer selben horizontalen Ebene ausgerichtet sind und wobei mindestens eines der beiden Arbeitsteile (16, 17) von einer Seite relativ zu der landwirtschaftlichen Maschine (11) zumindest teilweise hervorsteht, die Vorrichtung **dadurch gekennzeichnet ist, dass** jedes der beiden Arbeitsteile (16, 17) durch die Halterung (15) in unabhängiger Weise gehalten wird, dass das zweite Arbeitsteil (17), im Wesentlichen horizontal bleibend, zwischen der Arbeitsstellung und einer passiven Stellung, in der es auf das erste Arbeitsteil (16) gesetzt wird, umgesetzt werden kann, und dass das erste Arbeitsteil (16) in axialer Richtung relativ zur Halterung (15) zwischen der Arbeitsstellung, in der es zumindest teilweise von einer Seite der landwirtschaftlichen Maschine (11) hervorsteht, und einer passiven Stellung, in der es relativ zu der landwirtschaftlichen Maschine (11) zentriert wird, sich verschieben kann.

2. Vorrichtung nach Anspruch 1, **dadurch gekennzeichnet, dass** Betätigungseinrichtungen (30, 36, 40, 60a, 60b) vorgesehen sind, um die Bewegungen der beweglichen Arbeitsteile in synchronisierter Weise auszuführen, so dass der Schwerpunkt der Kombination der Arbeitsteile (16, 17, 18) im Wesentlichen in einer relativ zur landwirtschaftlichen Maschine (11) auch während dieser Bewegungen in einer zentrisch eingestellten Position bleibt.

3. Vorrichtung nach Anspruch 2, bei der die Schereinrichtungen zumindest ein Schermesser (13,14) umfassen, das in einem unteren Bereich des entsprechenden Arbeitsteils (16, 17, 18) montiert ist, damit es nahe am Boden (50) ist, wenn sich jedes Arbeitsteil (16, 17, 18) in der Arbeitsstellung befindet, **dadurch gekennzeichnet, dass** die Betätigungseinrichtungen imstande sind, jedes bewegliche Arbeitsteil ausschließlich translatorische, nicht rotierende, Bewegungen ausführen zu lassen, so dass das jeweilige Schermesser (14) in seiner unteren Position bleiben kann, selbst wenn die beweglichen Arbeitsteile (17, 18) in der passiven Stellung sind, um dem Fahrer der landwirtschaftlichen Maschine (11) eine bessere Sicht zu ermöglichen.

4. Vorrichtung nach Anspruch 2, **dadurch gekennzeichnet, dass** die Betätigungseinrichtungen mindestens ein erstes fluid-dynamisches Betätigungselement (30) umfassen, welches das erste Arbeitsteil (16) horizontal verschieben kann.

5. Vorrichtung nach Anspruch 4, **dadurch gekennzeichnet, dass** ein Ende (31) des ersten fluid-dynamischen Betätigungselements (30) mit der Halterung (15) und ein Ende (32) mit dem ersten Arbeitsteil (16) verbunden ist.

6. Vorrichtung nach Anspruch 2, **dadurch gekennzeichnet, dass** die Betätigungseinrichtungen mindestens ein zweites fluid-dynamisches Betätigungselement (36), welches das zweite Arbeitsteil (17) vertikal verschieben kann, und mindestens ein drittes fluid-dynamisches Betätigungselement (40), welches das zweite Arbeitsteil (17) horizontal verschieben kann, umfassen.

7. Vorrichtung nach den Ansprüchen 4 und 6, **dadurch gekennzeichnet, dass** das erste und das dritte fluid-dynamische Betätigungselement (30, 40) gleichzeitig betätigt werden können, um die zwei Arbeitsteile (16, 17) gleichzeitig, jedoch in entgegen gesetzten Richtungen zu verschieben.

8. Vorrichtung nach den Ansprüchen 4 und 6, **dadurch gekennzeichnet, dass** die Betätigungseinrichtungen computergestützte Steuereinrichtungen (45) umfassen, die die Auslösung des ersten, zweiten und dritten fluid-dynamischen Betätigungselements (30, 36, 40) koordinieren können.

9. Vorrichtung nach Anspruch 2, **dadurch gekennzeichnet, dass** die Betätigungseinrichtungen (60a, 60b) jeweils ein erstes Zahnrad (61) und ein zweites Zahnrad (62), die beide an gegenüber liegenden Seiten montiert und relativ zur Halterung (15) drehbar sind, wobei das erste Zahnrad (61) an einem Ende eines ersten Arms (64), der mit einer ersten Zapfeneinrichtung (66) des zweiten Arbeitsteils (17, 18) verbunden ist, befestigt ist, das zweite Zahnrad (62) an einem Ende eines entsprechenden zweiten Arms (65), der mit einer zweiten Zapfeneinrichtung (67) des zweiten Arbeitsteils (17, 18) verbunden ist, befestigt ist, und eine Verbindungskette (63) umfassen, die imstande ist, die Zahnräder (61, 62) miteinander zu verbinden.

10. Vorrichtung nach Anspruch 9, **dadurch gekennzeichnet, dass** beide Arme (64, 65) im Wesentlichen ellenbogenförmig sind und im Wesentlichen spiegelbildlich zu einander angeordnet sind, damit sie um einen Winkel ("α") größer als 180° drehen können.

11. Vorrichtung nach Anspruch 9, **dadurch gekennzeichnet, dass** der Abstand zwischen den Rotationsachsen der beiden Zahnräder (61, 62) im Wesentlichen dem Abstand zwischen den zwei Zapfen (66, 67) entspricht.

12. Vorrichtung nach Anspruch 9, **dadurch gekennzeichnet, dass** mindestens ein Kettenspannelement (68) so angeordnet ist, dass es ein im Wesentlichen geradliniges Segment (70) der Verbindungskette (63) bildet.

13. Vorrichtung nach Anspruch 12, **dadurch gekennzeichnet, dass** in Zuordnung mit dem im Wesentlichen geradlinigen Segment (70) die Verbindungskette (63) mit einem entsprechenden, an der Halterung (15) montierten, Betätigungselement (71) verbunden ist.

14. Vorrichtung nach Anspruch 1, **dadurch gekennzeichnet, dass** der Trägeraufbau einen hinteren Rahmen (15) umfasst, der an dem beweglichen Aufbau (12) der landwirtschaftlichen Maschine (11) montiert werden kann.

15. Vorrichtung nach den Ansprüchen 5 und 8, **dadurch gekennzeichnet, dass** das zweite fluid-dynamische Betätigungselement (36) an einer Seite (37) des hinteren Rahmens (15) befestigt ist, und dass die gesamte, quer verlaufende Größe des hinteren Rahmens (15) und des zweiten fluid-dynamischen Betätigungselements (36) geringer als die Länge von jedem der Arbeitsteile (16, 17) ist.

16. Vorrichtung nach Anspruch 1, **dadurch gekennzeichnet, dass** jede der Schereinrichtungen (13,14) im Wesentlichen so lang ist wie das entsprechende Arbeitsteil (16, 17).

17. Vorrichtung nach Anspruch 1. **dadurch gekennzeichnet, dass** jedes Arbeitsteil (16, 17) eine vordere Haspel (21, 22) umfasst.

18. Vorrichtung nach Anspruch 1, **dadurch gekennzeichnet, dass** jedes Arbeitsteil (16, 17) eine Transportwalze (19, 20) umfasst.

19. Vorrichtung nach den Ansprüchen 5 und 8, **dadurch gekennzeichnet, dass** das erste Arbeitsteil (16) so montiert ist, dass es sich auf Führungen (25) des hinteren Rahmens (15) in horizontaler Richtung bewegen kann, und dass das zweite Arbeitsteil (17) durch ein Führungselement (34), das an dem zweiten fluiddynamischen Betätigungselement (36) montiert ist, gehalten wird.

20. Vorrichtung nach Anspruch 19, **dadurch gekennzeichnet, dass** ein Ende (41) des dritten fluid-dynamischen Betätigungselements (40) mit dem Führungselement (34) und ein Ende (42) mit dem zweiten Arbeitsteil (17) verbunden ist.

## Revendications

1. Équipement à barre de coupe destiné à être monté sur une machine de récolte agricole (11), comprenant au moins un premier et un deuxième organes de fonctionnement (16, 17) qui sont pourvus chacun de moyens de coupe sensiblement horizontaux (13, 14), et de moyens de support (15) qui peuvent être associés à ladite machine agricole (11) et qui sont aptes à supporter lesdits deux organes de fonctionnement (16, 17), lesdits deux organes de fonctionnement (16, 17) étant aptes à assumer des positions de travail respectives dans lesquelles ils sont alignés sur un même plan horizontal et dans lesquelles au moins un desdits deux organes de fonctionnement (16, 17) fait saillie, au moins partiellement, sur un côté par rapport à ladite machine agricole (11), l'équipement étant **caractérisé en ce que** chacun desdits deux organes de fonctionnement (16, 17) est supporté de façon autonome par lesdits moyens de support (15), que ledit deuxième organe de fonctionnement (17) est apte à être translaté, tout en restant sensiblement horizontal, entre ladite position de travail et une position inactive dans laquelle il est superposé en dessus dudit premier organe de fonctionnement (16), et **en ce que** ledit premier organe de fonctionnement (16) est apte à glisser axialement par rapport aux dits moyens de support (15) entre ladite position de travail dans laquelle il fait saillie au moins partiellement sur un côté de ladite machine agricole (11) et une position inactive dans laquelle il est centré par rapport à ladite machine agricole (11).

2. Équipement selon la revendication 1, **caractérisé en ce que** des moyens d'actionnement (30, 36, 40, 60a, 60b) sont fournis pour exécuter, de façon synchronisée, les mouvements desdits organes de fonctionnement, de façon à ce que le baricentre de la combinaison desdits organes de fonctionnement (16, 17, 18) reste sensiblement dans une position centrée par rapport à ladite machine agricole (11) également pendant lesdits mouvements.

3. Équipement selon la revendication 2, dans lequel lesdits moyens de coupe comprennent au moins une lame de coupe (13, 14) assemblée dans une zone inférieure de l'organe de fonctionnement (16, 17, 18) correspondant, de façon à se trouver près du sol (50) lorsque chaque organe de fonctionnement (16, 17, 18) se trouve dans la position de travail, **caractérisé en ce que** lesdits moyens d'actionnement sont aptes à amener chaque organe de fonctionnement mobile à exécuter des mouvements de translation pure, et non de rotation, de façon à ce que la lame de coupe relative (14) puisse demeurer dans sa position abaissée, même lorsque lesdits organes de fonctionnement mobiles (17, 18) se trouvent dans la position inactive, de façon à permettre à l'opérateur de ladite machine agricole (11) d'avoir une meilleure visibilité.

4. Équipement selon la revendication 2, **caractérisé en ce que** lesdits moyens d'actionnement comprennent au moins un premier actionneur à commande dynamique par fluide (30) qui est apte à déplacer ledit premier organe de fonctionnement (16) horizontalement.

5. Équipement selon la revendication 4, **caractérisé en ce que** ledit premier actionneur à commande dynamique par fluide (30) a une extrémité (31) qui est raccordée à ladite structure de support (15) et une autre extrémité (32) qui est raccordée au dit premier organe de fonctionnement (16).

6. Équipement selon la revendication 2, **caractérisé en ce que** lesdits moyens d'actionnement comprennent au moins un deuxième actionneur à commande dynamique par fluide (36) qui est apte à déplacer ledit deuxième organe de fonctionnement (17) verticalement, et au moins un troisième actionneur à commande dynamique par fluide (40) qui est apte à déplacer ledit deuxième organe de fonctionnement (17) horizontalement.

7. Équipement selon les revendications 4 et 6, **caractérisé en ce que** lesdits premier et troisième actionneurs à commande dynamique par fluide (30, 40) sont aptes à être actionnés en même temps de façon à déplacer lesdits deux organes de fonctionnement (16, 17) en même temps mais dans des directions opposées.

8. Équipement selon les revendications 4 et 6, **caractérisé en ce que** lesdits moyens d'actionnement comprennent des moyens de commande par ordinateur (45) qui sont aptes à coordonner l'actionnement desdits premier, deuxième et troisième actionneurs à commande dynamique par fluide (30, 36, 40).

9. Équipement selon la revendication 2, **caractérisé en ce que** lesdits moyens d'actionnement (60a, 60b) comprennent chacun une première roue dentée (61) et une deuxième roue dentée (62) qui sont montées toutes les deux sur des côtés opposés et qui sont susceptibles de tourner par rapport aux dits moyens de support (15), ladite première roue dentée (61) étant fixée à une extrémité d'un premier bras (64) qui est relié à des premiers moyens formant axe (66) dudit deuxième organe de fonctionnement (17, 18), ladite roue dentée (62) étant fixée à une extrémité d'un deuxième bras correspondant (65) qui est relié à des deuxièmes moyens formant axe (67) dudit deuxième organe de fonctionnement (17, 18), une chaîne de liaison (63) étant apte à raccorder lesdites roues dentées (61, 62) l'une avec l'autre.

10. Équipement selon la revendication 9, **caractérisé en ce que** les deux desdits bras (64, 65) ont une forme sensiblement coudée et sont agencés de façon sensiblement spéculaire l'un par rapport à l'autre, de façon à pouvoir tourner sur un angle ("α") de plus de 180°.

11. Équipement selon la revendication 9, **caractérisé en ce que** la distance entre les axes de rotation desdites deux roues dentées (61, 62) est sensiblement égale à la distance entre lesdits deux moyens formant axe (66, 67).

12. Équipement selon la revendication 9, **caractérisé en ce qu'**au moins un élément de tension de chaîne (68) est disposé de façon à définir un segment sensiblement rectiligne (70) de ladite chaîne de liaison (63).

13. Équipement selon la revendication 12, **caractérisé en ce que**, en correspondance avec ledit segment sensiblement rectiligne (70), ladite chaîne de liaison (63) est raccordée à un actionneur correspondant (71) monté sur lesdits moyens de support (15).

14. Équipement selon la revendication 1, **caractérisé en ce que** ladite structure de support comprend un bâti arrière (15) qui est apte à être monté sur la structure mobile (12) de ladite machine agricole (11).

15. Équipement selon les revendications 5 et 8, **caractérisé en ce que** ledit deuxième actionneur à commande dynamique par fluide (36) est fixé sur un côté (37) dudit bâti arrière (15) et que la longueur transversale hors tout dudit bâti arrière (15) et dudit deuxième actionneur à commande dynamique par fluide (36) est inférieure à la longueur de chacun desdits organes de fonctionnement (16, 17).

16. Équipement selon la revendication 1, **caractérisé en ce que** chacun desdits moyens de coupe (13, 14) est sensiblement aussi long que l'organe de fonctionnement correspondant (16, 17).

17. Équipement selon la revendication 1, **caractérisé en ce que** chaque organe de fonctionnement (16, 17) est équipé d'un tambour avant (21, 22).

18. Équipement selon la revendication 1, **caractérisé en ce que** chaque organe de fonctionnement (16, 17) est équipé d'un rouleau de convoyeur (19, 20).

19. Équipement selon les revendications 5 et 8, **caractérisé en ce que** ledit premier organe de fonctionnement (16) est monté de façon à pouvoir coulisser horizontalement sur des guides (25) dudit bâti arrière (15), et **en ce que** ledit deuxième organe de fonctionnement (17) est supporté par un élément de guidage (34) monté sur ledit deuxième actionneur à commande dynamique par fluide (36).

20. Équipement selon la revendication 19, **caractérisé en ce que** ledit troisième actionneur à commande dynamique par fluide (40) a une extrémité (41) qui est raccordée au dit élément de guidage (34) et une autre extrémité (42) qui est raccordée au dit deuxième organe de fonctionnement (17).
